# EUROPÄISCHE PATENTSCHRIFT

(11) **EP 1 756 464 B1**
(45) Veröffentlichungstag und Bekanntmachung des Hinweises auf die Patenterteilung: **14.12.2016**
(21) Anmeldenummer: 05755920.5
(22) Anmeldetag: 07.06.2005
(51) Int. Cl.: F16L 47/03

(54) **VERBINDUNGSANORDNUNG, INSBESONDERE ZUM KRAFTSCHLÜSSIGEN ANBINDEN VON MINDESTENS EINEM FASERVERBUND-BAUTEIL AN EIN WEITERES BAUTEIL**
CONNECTING ARRANGEMENT, PARTICULARLY FOR THE NON-POSITIVE FASTENING OF AT LEAST ONE FIBER COMPOSITE COMPONENT TO ANOTHER COMPONENT
SYSTEME DE LIAISON, EN PARTICULIER POUR L'ASSEMBLAGE PAR LIAISON DE FORCE D'AU MOINS UNE PIECE STRUCTURALE COMPOSITE A BASE DE FIBRES A UNE AUTRE PIECE STRUCTURALE

(30) Priorität: 08.06.2004 DE 102004027795
(43) Veröffentlichungstag der Anmeldung: 28.02.2007
(73) Patentinhaber: Friatec Aktiengesellschaft, 68229 Mannheim (DE)
(72) Erfinder: ELSASSER, Dirk, 68259 Mannheim (DE); GOERKE, Werner, 68549 Ilvesheim (DE); MAIER, Fabian, 67368 Westheim (DE)
(74) Vertreter: Angerhausen, Christoph
(86) Internationale Anmeldenummer: PCT/DE2005/001007
(87) Internationale Veröffentlichungsnummer: WO 2005/121627

(56) Entgegenhaltungen:
- WO-A-00/55538
- WO-A-01/92775
- DE-A1- 4 123 383
- DE-A1- 10 345 034
- GB-A- 2 314 597
- GB-A- 2 318 543
- US-B1- 6 478 338

## Beschreibung

Die Erfindung betrifft eine Verbindungsanordnung, insbesondere zum kraftschlüssigen Anbinden von mindestens einem Faserverbund-Bauteil an ein weiteres Bauteil.

Faserverstärkte Polyethylenrohre werden seit einigen Jahren primär im Offshore-Bereich für den Medientransport von Rohöl und Gas eingesetzt. Hierbei handelt es sich um Mehrschichtrohre mit einer Innenlage aus Polyethylen und einer mittig aufgebrachten Faserschicht, beispielsweise unter Verwendung einer Aramidfaser, und einem äußeren Mantelrohr, das ebenfalls wieder aus Polyethylen besteht. Diese Rohre sind für einen Druck- und Temperaturbereich von bis zu 80 bar und 60°C verwendbar. Es können auch Rohre aus vernetztem Polyethylen eingesetzt werden, ebenso solche aus Polyamid. Die Erfindung bezieht sich ganz allgemein auf verstärkte Kunststoffrohre, deren Innenlage und/oder Außenlage mittels Heizwendelschweißtechnik an andere Komponenten angebunden werden kann.

Problematisch ist der Übergang zwischen den Rohren, sei es, daß diese einheitliche Faserverbund-Rohre sind oder auch Metallrohre, die mit Faserverbund-Rohren verbunden werden sollen. Aus dem Stand der Technik sind Muffen- und Werkstoffübergänge bekannt, die auch international zugelassen sind, aber sehr teuer und aufwendig in der Handhabung sind, weil sie eine Stumpfschweißung zuzüglich der Schweißung des Mantelrohres auf der Baustelle erfordern. Dabei verfolgen alle Lösungen im Stand der Technik das Ziel, die Vorteile von Polyethylen, nämlich Schweißbarkeit, Korrosionsbeständigkeit und Elastizität bei gleichzeitig hoher Druckbeständigkeit von über 50 bar durch die Stützfasern zu vereinen. Nachteilig ist, daß bei Anwendung der Stumpfschweißtechnologie zur Verbindung des Inlinerrohres kein Formteil in Verbindung mit RTP-Rohren (RTP = Reinforced Thermoplastic Pipe) eingesetzt werden kann.

Das Problem beim Verbinden von Rohren, die faserverstärkt sind, ist, daß die Fasern an den einzelnen Rohrenden freiliegen und somit dem Medienstrom ausgesetzt sind. Dies bedeutet, daß der Medienstrom in den Faserverbund eindringen kann und diesen langsam zersetzt. An einem kritischen Schwellwert kann es dann zu einem explosionsartigen Aufbrechen der gesamten Rohrstruktur kommen.

Die WO 01/92775 A1 beschreibt ein System zum Verbinden zweier Rohre, die jeweils aus einem innerem metallischen Rohr und einem darüberliegenden Kunststoffmantelrohr aufgebaut sind. Ein metallisches Versiegelungselement ist vorgesehen, welches fluiddicht in dem inneren metallische Rohr liegt. Ein Belastungselement vermittelt den Kraftschluß zwischen den verbundenen Bauteilen, wobei es sich hier um eine Außenmuffe handelt, die mittels der Heizwendelschweißtechnik in dem äußeren Kunststoffmantel verschweißt wird.

Die US 6 478 338 B1 offenbart ein als Außenmuffe ausgebildetes Belastungselement, welche auch als koppelnde Hülse dient. Die axialen Kräfte werden dabei durch eine Schicht aus faserverstärktem Kunststoff aufgefangen.

Die DE 41 23 383 A1 beschreibt eine Anordnung mit einer Elektro-Schweißmuffe, bei der ein innenliegendes muffenartiges Halteteil vorgesehen ist, das allerdings nicht mit den Rohrenden verschweißt ist, so daß eine gas- und fluiddichte Überbrückung fehlt.

Die DE 103 45 034 A1 beschreibt ein System aus zwei Rohrelementen, welche über ein Anschlußstück fluiddicht miteinander verbunden sein sollen. Das Anschlußstück weist Anschlußstutzen auf, in die die zu verbindenden Rohrelemente einzuschieben sind. Diese Stutzen bilden dabei eine Art Innenmuffe, die mit den Innenseiten des Rohres verschweißt wird. Der außenliegende Sperrkörper weist Sperringe auf, ist aber nicht mit dem Rohr verschweißt, so daß eine Belastung in axialer Richtung nicht aufgefangen werden kann.

Die GB 2 324 957 A offenbart ein System, das aus mindestens einem Verbundrohr und einem weiteren Rohr besteht und eine Verbindungsanordnung zum kraftschlüssigen Anbinden des mindestens einen Verbundrohres an das weitere Rohr aufweist. Ein Versiegelungselement ist vorgesehen, welches mit der Heizwendelschweißtechnik zumindest mit dem mindestens einen Verbundrohr so verbunden ist, daß es das freiliegende Ende des Verbundrohres gas- und fluiddicht umgibt. Ein Belastungselement stellt den Kraftschluß zwischen den verbundenen Rohren sicher und weist an der zum Verbundrohr weisenden Seite mindestens eine Heizwendel auf.

Die Erfindung zielt darauf ab, ein System mit einer Anordnung zur Verfügung zu stellen, welche durch Abdecken und Verschließen der Fasern an den einzelnen Rohrenden für die Fluiddichtigkeit sorgt, ohne die Verstärkungsschicht bearbeiten zu müssen, und wobei es weiter möglich sein soll, daß eine äußere Verschweißung des Außenmantels beider Rohrenden längskraftschlüssig erfolgen kann.

Die Erfindung realisiert dies durch eine Verbindungsanordnung, insbesondere zum kraftschlüssigen Anbinden von mindestens einem Faserverbund-Bauteil an ein weiteres Bauteil, bei der zumindest ein Versiegelungselement vorgesehen ist, welches die exponierten Teile des Faserverbund-Bauteiles, beispielsweise die oben erwähnten freiliegenden Faserenden, gas- und fluiddicht umgibt, und bei der ein Belastungselement vorgesehen ist, welches den Kraftschluß zwischen den verbundenen Bauteilen sicherstellt.

Das Versiegelungselement und das Belastungselement werden mittels der Heizwendelschweisstechnik an das Faserverbundteil angebunden.

Hierdurch wird eine absolut dichte und kraftschlüssige Verbindung sichergestellt, die gleichzeitig eine hohe Druckbelastung realisiert. Die Verbindung ist mit denen am Markt verfügbaren Barcodeschweißgeräten möglich. Im Vergleich zum Stand der Technik werden verarbeitungstechnische Vorteile bei geringeren Kosten ausgenutzt.

Vorteilhaft ist die Erfindung dadurch gekennzeichnet, daß das Versiegelungselement die Ausrichtung der zu verbindenden Bauteile besorgt. Während daran gedacht werden kann, jedes der zu verbindenden Bauteile mit einem einzelnen Versiegelungselement zu versehen, die im nachhinein beispielsweise mittels der Heizwendelschweißtechnik mit den Bauteilen und/oder miteinander verbunden werden können, kann auch vorgesehen sein, daß ein einziges Versiegelungselement die Ausrichtung der zu verbindenden Bauteile besorgt.

Es ist bereits angesprochen worden, daß das Versiegelungselement mittels Heizwendelschweißtechnik zumindest mit dem Faserverbund-Bauteil zu verbinden ist. Es gibt auch Möglichkeiten, das weitere Bauteil mittels dieser Technik anzubinden, selbst wenn dieses, wie vorgesehen, nicht ein Faserverbund-Bauteil, sondern ein metallisches Bauteil ist.

Eine besondere Anwendungsform findet die Verbindungsanordnung gemäß der vorliegenden Erfindung bei Rohren, die aus Faserverbund oder aus einem anderen Element bestehen können. Die Erfindung ist darauf allerdings nicht beschränkt und kann bei beliebig gestalteten Verbindungen eingesetzt werden.

Der besondere Vorteil der Erfindung bei der Verwendung von Rohren liegt darin, daß das Abschließen der Faser an jedem einzelnen Rohrende möglich ist. Nicht nur kann eine Verbindung analog einer normalen Polyethylen-Leitung erfolgen, wobei eine einfache Reparatur, beispielsweise durch eine Überschiebmuffe vorgenommen werden kann. Die Verschweißung erfolgt an einer inneren Polyethylenschicht, ohne die Armierung zu berühren. Unabhängig vom Armierungswerkstoff, wie Gewebe, Stahl oder dergleichen, und unabhängig von der Dicke der Armierung, kann gearbeitet werden. Eine minimale Querschnittsverjüngung und damit auch strömungsbegünstigte Kontur der Innenmuffe als Versiegelungselement kann sichergestellt werden.

Es können nicht nur Verbindung zwischen gleichartigen Bauteilen hergestellt werden, es ist auch möglich, daß eines der Bauteile ein Faserverbund-Bauteil ist, während das weitere Bauteil ein metallisches Bauteil ist.

Die Verarbeitung erfolgt nach dem heute üblichen Heizwendelschweißverfahren. Dabei ist nur ein Schweißverfahren für die gesamte Verbindungstechnik erforderlich, was es auch erübrigt, daß Sondergeräte für die Verschweißung bereitgestellt werden.

Vorteilhaft besorgt das Versiegelungselement die Ausrichtung der zu verbindenden Bauteile. Es definiert eine bestimmte Auflagefläche bzw. Schweißfläche durch definierte Innenschälungen. Dabei ist es auf Anforderung anpassbar, beispielsweise auf verschiedene Rohrdurchmesser, wenn eines der Bauteile oder beide dadurch gegeben ist.

Das Versiegelungselement kann mittels der Heizwendelschweißtechnik zumindest mit dem Faserverbund-Bauteil verbunden sein. Es treten nur geringe Axialkräfte auf, so daß keine Haltevorrichtung notwendig ist.

Das weitere Bauteil kann ein Faserverbund-Bauteil oder ein Bauteil aus einem anderen Material sein. In der Offshore-Technik ist es oftmals der Fall, daß Metallrohre zu ersetzen sind, wobei der Übergang dann zu moderneren Faserverbund-Bauteilen zu schaffen ist. Hier ist die Erfindung vorteilhaft einzusetzen.

Das Belastungselement ist bevorzugt eine Außenmuffe, welche die Verbindungsstelle der zu verbindenden Bauteile umgibt. Dabei ist zweckmäßigerweise die Außenmuffe an ihrer Innenseite mit mindestens einer Heizwendel versehen.

Es hat sich gezeigt, daß, insbesondere wenn ein Versiegelungselement aus einer zweiteilig ausgebildeten Innenmuffe eingesetzt wird, aufgeschmolzenes Kunststoffmaterial kriecht und eine gute Schweißverbindung verhindert. Deshalb ist es besonders vorteilhaft, wenn bei der Außenmuffe zwei voneinander beabstandete Heizwendel vorgesehen sind, welche zwischen sich die Spiegelfläche der aneinandergrenzenden Innenmuffenelemente freilassen. Dabei kann durchaus vorgesehen sein, die beiden Heizwendel unabhängig voneinander mit Energie zu beaufschlagen, wobei es aber vorteilhaft ist, wenn die beiden Heizwendel elektrisch in Reihe geschaltet sind. Der überbrückende Kontakt kann dabei in geeigneter Weise versteckt werden.

Nach einer weiteren Ausführungsform weist die Außenmuffe einen Träger auf, an dem zumindest ein mit Heizwendel versehenes Schweißelement angebracht ist. Mit anderen Worten wird dort nicht die Schweißwendel direkt in den Muffenkörper integriert, sondern in einem separaten Bauteil untergebracht, so daß unterschiedliche Wendelsteigungen, Drahtdicken usw. zum Einsatz kommen können.

Vorteilhaft ist die Außenmuffe mit einer Verstärkungsschicht oder einer Armierung versehen.

Für Bauteile, insbesondere Rohre, mit unterschiedlichen Druckstufen, bleibt das Versiegelungselement - die Innenmuffe - immer gleich, während die Außenmuffe durch Armierung und mögliche Verlängerung an unterschiedliche Druckstufen angepasst wird. Insbesondere wird die Arbeit dadurch vereinfacht, daß die Verschweißung der Innenmuffe beim Hersteller bzw. der Verleger schon vorab erfolgen kann. Innen- und Außenschweißung sind getrennt voneinander kontrollierbar, wobei die Innenmuffe mit einem Indikator versehen werden kann.

Das Versiegelungselement - die Innenmuffe - kann einteilig oder zweiteilig ausgebildet sein. Vorteilhaft ist am Versiegelungselement ein Positionierflansch vorgesehen, beispielsweise in Form eines zumindest teilweise umlaufenden Ringflansches, der die genaue Ausrichtung der aneinanderstoßenden Rohrstücke gewährleistet. Es wurde schon angesprochen, daß die besondere Anordnung der Heizwendel, nämlich beabstandet, dafür sorgt, daß die Schweißverbindung immer sauber ausgeführt wird, es können aber auch an dem Versiegelungselement entsprechende Maßnahmen getroffen werden, indem beispielsweise eine den Innendruck abfangende Dichtlippe am Versiegelungselement angebracht wird.

Im folgenden soll die Erfindung anhand der Zeichnung beispielhaft erläutert werden. Es zeigt:
- Figur 1: eine Ausgestaltung der Erfindung zur Verbindung zweier Innenrohre mit einer Innenmuffe aus Polyethylen;
- Figur 2: eine Ausgestaltung der Erfindung mit einer Innenmuffe aus Polyethylen, die eine Stützhülse aus Polyoxymethylen aufweist;
- Figur 3: eine Ausgestaltung der Erfindung mit zwei Innenmuffen;
- Figur 4: eine Längsschnittansicht einer Außenmuffe mit durchgehender Heizwendel;

- Figur 5: eine Längsschnittansicht einer Außenmuffe mit zwei voneinander beabstandeten Heizwendeln, die unabhängig voneinander mit Energie beaufschlagbar sind;
- Figur 6: eine Längsschnittansicht einer Außenmuffe mit voneinander beabstandeten Heizwendeln, die mittels einer versteckten Brücke elektrisch in Reihe geschaltet sind;
- Figur 7: eine Längsschnittansicht durch eine Verbindungsanordnung mit einer Außenmuffe nach Figur 5 oder Figur 6 sowie zweigeteilter Innenmuffe;
- Figur 8: eine Längsschnittansicht durch eine Innenmuffe nach einer ersten Ausgestaltung;
- Figur 9: eine Längsschnittansicht einer Innenmuffe nach einer zweiten Ausgestaltung;
- Figur 10: eine Längsschnittansicht eines Innenmuffenelements für eine zweigeteilte Innenmuffe;
- Figur 11: eine Längsschnittansicht eines Innenmuffenelements, bei dem die Heizwendel erkennbar ist;
- Figur 12: eine Längsschnittansicht eines Innenmuffenelements mit Dichtlippe;
- Figur 13: eine Schnittansicht durch den Anschlußbereich zweier Rohre, wobei die Außenmuffe zwei Schweißelemente aufweist;
- Figur 14: die Gestaltung eines Übergangs zu einem weiteren Bauteil, beispielsweise einem Stahlrohr, nach einer ersten Ausführungsform; und

- Figur 15: die Gestaltung eines Übergangs zu einem weiteren Bauteil nach einer zweiten Ausführungsform.

Obwohl in der Zeichnungsfigur die Erfindung anhand der Verbindung zweier faserverstärkter Rohre erläutert wird, soll verstanden werden, daß auch an die Verbindung von Rohren aus anderen Materialien gedacht wird. Fernerhin findet die Erfindung Anwendung auf Bauteile, wie Ventile, Abzweigungen und dergleichen, bei denen ein fluidmitteldichter Übergang erforderlich ist.

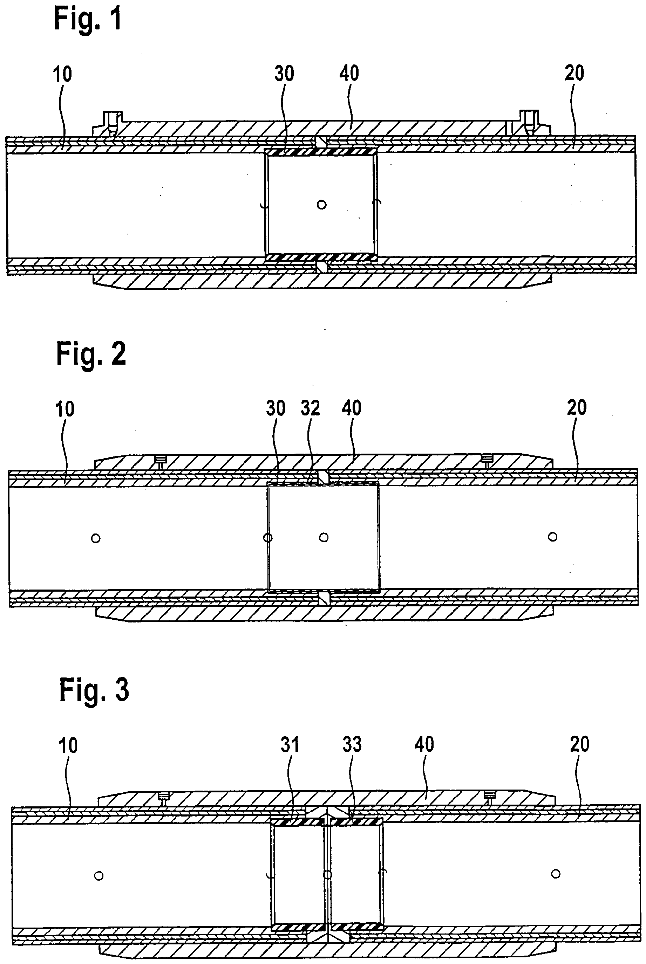

In Figur 1 ist in ein Rohr 10 aus Faserverbundmaterial eine Innenmuffe 30 eingebracht, und zwar mittels der Heizwendelschweißtechnik, bei der auf der Innenmuffe 30 mindestens eine Wicklung aus Heizwendeln aufgebracht ist, die durch gezielte Stromzufuhr von außen dafür sorgt, daß das Rohr 10 und die Innenmuffe 30 innig miteinander verbunden werden. Die Innenmuffe 30 sorgt zudem dafür, daß das zu verbindende Rohr 20 axial mit dem Rohr 10 ausgerichtet wird. Auch hier kann die Heizwendelschweißtechnik eingesetzt werden, um die Innenmuffe 30 mit dem Rohr 20 zu verbinden. Obwohl hier geschildert ist, daß die Verbindung zu unterschiedlichen Zeiten geschieht, kann durchaus vorgesehen sein, daß das Rohr 10 und das Rohr 20 im wesentlichen gleichzeitig mit der Innenmuffe 30 verbunden werden. Die Verbindungsstelle zwischen den Rohren 10, 20 wird weiterhin mit einer Außenmuffe 40 gesichert. Die Außenmuffe 40 fängt axiale Kräfte ab, die auf die Rohre 10, 20 auftreten bzw. durch sie ausgeübt werden. Die Außenmuffe kann selbst verstärkt werden, wenn dies erforderlich ist.

Figur 2 zeigt eine Variante, bei der die Innenmuffe 30 mit einer Stützhülse 32 aus Polyoxymethylen versehen ist. Ansonsten entspricht der Aufbau der der Figur 1. Die Innenmuffe 30 mit Stützhülse 32 bewirkt, daß eine geringere Querschnittsverjüngung an der Verbindungsstelle zwischen dem Rohr 10 und dem Rohr 20 auftritt. Der Aufbau der Außenhülse 40 bleibt davon unberührt.

Eine Variante mit zwei Innenmuffen 31, 33 ist in Figur 3 gezeigt. Sowohl das Rohr 10 als auch das Rohr 20 werden vorab mit der entsprechenden Innenhülse 31, 33 verschweißt. Dies hat den Vorteil größerer Toleranzen bei der Koaxialausrichtung der Rohre. Anschließend wird die Außenhülse 40 aufgebracht, so daß das System dann fluid- und druckdicht versiegelt ist.

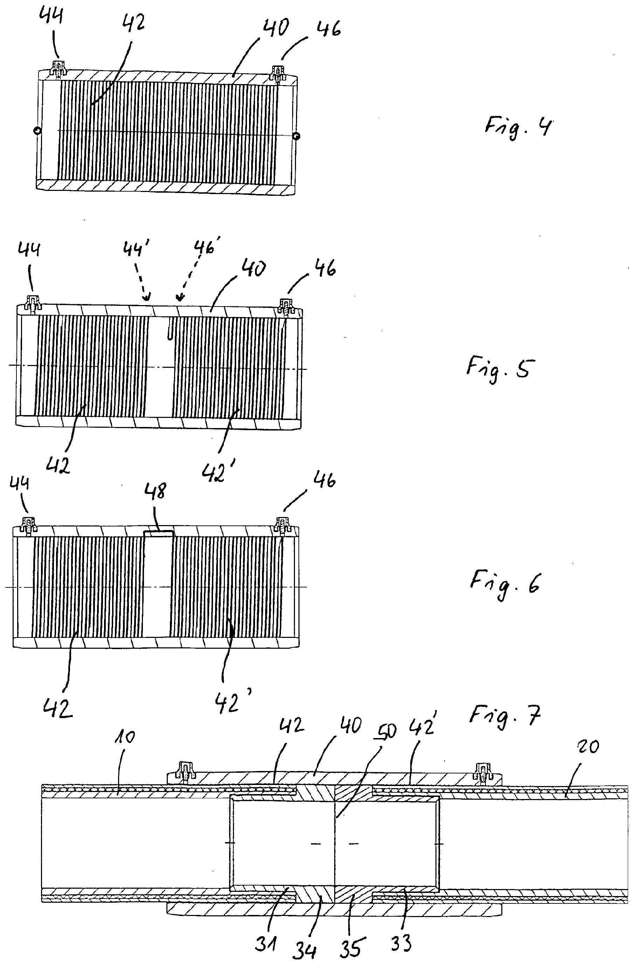

Figur 4 zeigt eine Längsschnittansicht einer Außenmuffe 40, bei der eine einzige Heizwendel 42 in deren Innenwand eingelassen ist. Die Enden der Heizwendel 42 sind durch eine Kontaktierung 44 bzw. eine Kontaktierung 46 an die Außenfläche der Außenmuffe 40 geführt, so daß sie für die Beaufschlagung mit elektrischer Energie leicht zugänglich sind.

Figur 5 zeigt eine Variante einer Außenmuffe 40, bei der zwei beabstandete Heizwendel 42, 42' angeordnet sind. Der Zwischenraum zwischen den Heizwendeln 42, 42' wird dabei über der Spiegelfläche aneinanderstoßender Innenmuffenelement liegen. Dies wird im Zusammenhang mit Figur 7 deutlich. Bei der Ausführungsform gemäß Figur 5 ist jede der Heizwendel 42, 42' unabhängig mit Energie beaufschlagbar, wobei diese über Kontaktierungen 44 und (nicht sichtbar) 44' bzw. (nicht sichtbar) 46' und 46 erfolgt.

Schaltungstechnisch einfacher ist die Ausgestaltung nach Figur 6, bei der die Heizwendeln 42, 42' durch eine Kontaktbrücke 48 miteinander verbunden sind, so daß die Beaufschlagung mit Energie lediglich über die Kontaktierungen 44 und 46 erfolgt.

Figur 7 zeigt, wie zwei Rohre 10, 20 miteinander verbunden werden. Jedes des Rohre 10, 20 wird mit einem Innenmuffenelement 31 bzw. 33 versehen, wobei Rohr und die jeweilige Innenmuffe durch Heizwendelschweißtechnik miteinander verbunden werden. Jedes der Innenmuffenelemente 31, 33 weist einen Positionierflansch 34 bzw. 35 auf, hier in Form eines umlaufenden Ringflansches an der Spiegelfläche, wobei die Positionierflansche 34, 35 im Zusammenwirken mit der Außenhülse 40 für eine genaue Positionierung der Rohre 10, 20 relativ zueinander sorgen. Als Außenmuffe 40 wird eine Ausführungsform nach Figur 5 oder Figur 6 eingesetzt. Dies bedeutet, daß unmittelbar an der Spiegelfläche 50, an der die Innenmuffenelement 31, 33 aneinanderstoßen, nicht geschweißt wird, da dort zwischen den Heizwendeln 42 bzw. 42' ein Raum verbleibt. An den kritischen Stellen erfolgt somit kein Aufschmelzen von Material, das in unerwünschter Weise kriechen würde.

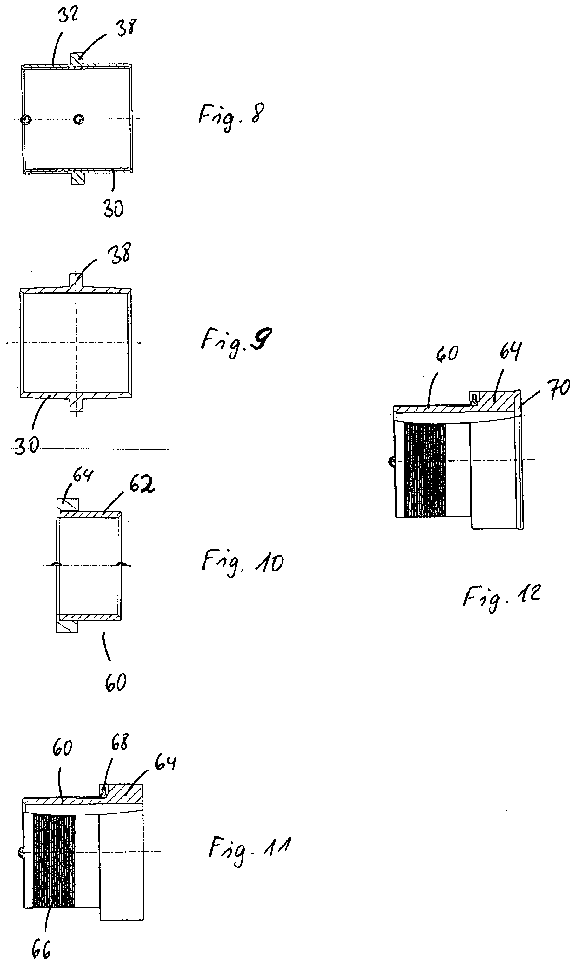

In den Figuren 8 bis 12 sind verschiedene Ausführungsformen von Innenmuffendargestellt.

Figur 8 zeigt eine einteilige Innenmuffe 30, die, ähnlich wie bei Figur 2, mit einer Stützhülse 32 aus Polyoxymethylen versehen ist. Mittig auf dem Außenumfang der Innenmuffe 30 ist ein Positionierflansch 38 einstückig mit der Stützhülse 32 ausgebildet.

Figur 9 zeigt eine weitere Ausführungsform einer einteiligen Innenmuffe 30 aus einem einheitlichen Material, ebenfalls mit einem mittig angeordneten Positionierflansch 38.

Figur 10 zeigt ein Innenmuffenelement 60, das aus einer Innenhülse 62 besteht, auf die ein Ringflanschelement 64 aufgesetzt ist.

Bei den Ausführungsformen nach den Figuren 8 bis 10 sind die Heizwendel für die Heizwendelschweißtechnik aus Gründen der Übersichtlichkeit weggelassen.

Figur 11 zeigt, wie diese bei einem Innenmuffenelement 60 mit einstückig daran angebrachtem Positionierflansch 64. Auf der Außenseite des Innenmuffenelementes 60 ist die Heizwendel 66 aufgebracht, die über eine Kontaktstelle 68 mit Energie zu beaufschlagen ist. Die Kontaktstelle 68 befindet sich unmittelbar hinter dem Positionierflansch 64 und liegt dort zwar zugänglich, jedoch weitgehend geschützt vor äußeren Einflüssen.

Das Innenmuffenelement 60 nach Figur 12 entspricht dem der Figur 11, wobei an dem später der Spiegelfläche zugewandten Seite des Positionierflansches 64 eine Dichtlippe 70 angeordnet ist, welche dafür sorgt, daß ein Teil des Innendruckes aus der Rohrverbindung aufgefangen wird.

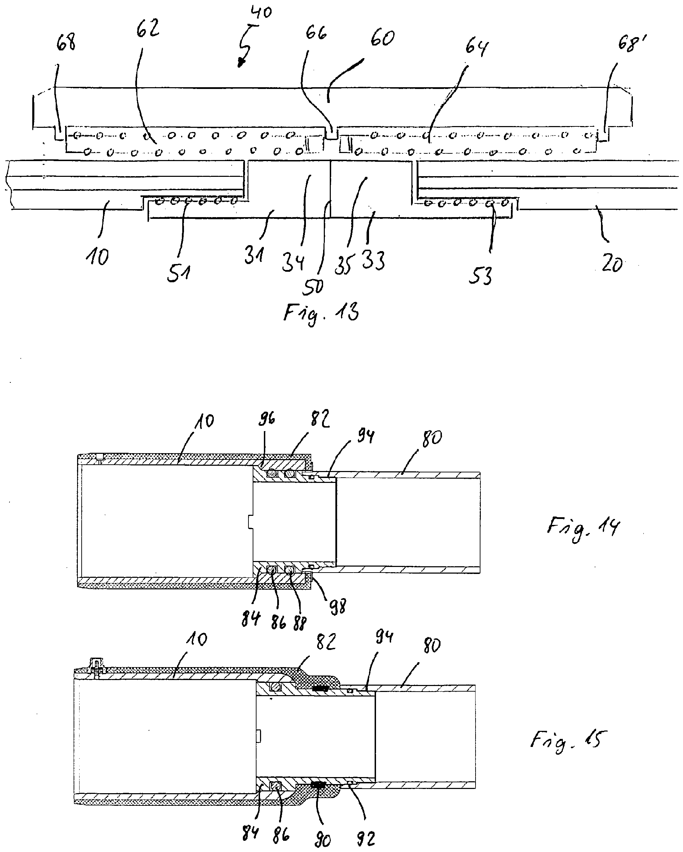

Figur 13 zeigt eine Teilschnittansicht einer Verbindungsstelle mit zwei Innenmuffenelementen 31, 33, welche jeweils an der dem entsprechenden Rohr 10 bzw. 20 zugewandten Seite mit einer Heizwendel 51 bzw. 53 versehen ist. Die Verschweißung des jeweiligen Innenmuffenelements 31 bzw. 33 mit dem entsprechenden Rohr 10 bzw. 20 kann vorab werksseitig erfolgen. Positionierflansche 34 und 35 sorgen für die genaue Ausrichtung in bezug auf die Spiegelfläche 50. Über die Verbindungsstelle ist eine Außenmuffe 40 geschoben, die aus einem hülsenartigen Träger 60 und zwei Schweißelemente 62 bzw. 64 besteht. Die Schweißelemente 62 und 64 enthalten die Heizdrähte der Heizwendel für das Verschweißen der Außenmuffe 40 mit dem Rohr 10 bzw. dem Rohr 20. Ein Ringflansch 66 trennt die beiden Schweißelemente 62 und 64 im Bereich der Spiegelfläche 50, Halteflansche 68 bzw. 68' sorgen dafür, daß die Schweißelemente 62 und 64 unverschieblich an dem Träger 60 festgelegt sind.

Die Figuren 14 und 15 zeigen den Übergang eines Faserverbundbauteils zu einem weiteren Bauteil, beispielsweise aus Stahl. Dieses Bauteil kann im Grunde ein beliebiges Element sein, das unterschiedlichste Geometrien aufweist, beispielsweise ein Rohr, ein Spitzende oder ein Flansch ist, und aus verschiedensten Materialien besteht. In das Rohr 10 ist dabei eine Metallhülse 84 eingelegt, die an dem vom Rohr 10 entfernten Ende ein Gewinde 94 aufweist. Bei der Ausführungsform nach Figur 14 stützt sich die Hülse 84 mittels einer umlaufenden Fase 96 der entsprechend ausgestalteten Innenseite des Rohres 10 ab. Die Abdichtung der Hülse 84 gegenüber dem Rohr 10 erfolgt über zwei O-Ringe 86 und 88. Die Anordnung aus Rohr 10 und Hülse 84 wird dann mit einer über Rohr 10 und Hülse 84 greifenden Faserschicht 82 bewickelt, um den axialen Kraftschluß herzustellen. Das Rohr 10 bildet somit den Inliner bzw. ein Innenrohr für die Schweißverbindung mittels Heizwendeltechnik. Auf die Hülse 84 kann dann das weitere Bauteil 80 aufgebracht bzw. auf das Gewinde 94 aufgeschraubt und gesichert werden, beispielsweise mittels Schrauben 98. Die Schrauben 98 greifen dabei vor die Faserschicht 82, die in Form eines zur Rohrmitte hin gerichteten Flansches das vordere Ende des Rohres 10 umgreift.

Bei der Ausführungsform nach Figur 15 ist die Hülse 84 mittels nur eines O-Ringes 86 gegenüber dem Rohr 10 abgedichtet. Die Faserschicht 82 verläuft in einer Verdickung über die aus dem Rohr 10 ragende Hülse 84, wobei unter der Verdickung eine formschlüssige Geometrie, die als Sechskant 90 ausgebildet sein kann, vorgesehen ist, um eine Verdrehsicherung der Komponenten gegeneinander zu bewirken. Ein weiterer O-Ring 92 sorgt für die Abdichtung des weiteren Bauteils 80 gegenüber der Hülse 84.

Insgesamt ist bei der Erfindung jeweils sichergestellt, daß die Faser des Faserverbund-Bauteiles vom Medium dauerhaft geschützt ist. Auch Werkstoffübergänge zwischen unterschiedlichen Materialien können behandelt werden. Die Erfindung ist nicht auf Rohre beschränkt, sondern gilt allgemein für Fittinge, Abzweigungen, T-Stücke und dergleichen. Alle gängigen Formteile sind in verstärkter Form einsetzbar.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. System, bestehend aus:
mindestens einem Faserverbund-Rohr;
einem weiteren Rohr, gegebenenfalls aus anderen Werkstoffen bestehend als das Faserverbund-Rohr; und
einer Verbindungsanordnung zum kraftschlüssigen Anbinden des mindestens einen Faserverbund-Rohrs an das weitere Rohr, bei der ein zweiteiliges, mindestens zwei Innenmuffenelemente (31, 33) umfassendes und einen Positionierflansch (64) aufweisendes Versiegelungselement (30, 31, 33) vorgesehen ist, welches mit der Heizwendelschweißtechnik zumindest mit dem mindestens einen Faserverbund-Rohr (10, 20) so verbunden ist, dass es freiliegende Faserenden des jeweiligen Faserverbund-Rohrs (10, 20) gas- und fluiddicht umgibt, und dass ein Belastungselement (40) vorgesehen ist, welches den Kraftschluss zwischen den verbundenen Rohren sicherstellt und an welchem an der zum Faserverbund-Rohr (10, 20) weisenden Seite zwei voneinander beabstandete Heizwendeln (42, 42') vorgesehen sind, sodass unmittelbar an einer Spiegelfläche (50), an der die Innenmuffenelemente (31, 33) aneinanderstoßen, nicht geschweißt wird.

2. System nach Anspruch 1, **dadurch gekennzeichnet, dass** das Versiegelungselement (30, 31 ,33) die Ausrichtung der zu verbindenden Bauteile (10, 20) besorgt.

3. System nach Anspruch 1, **dadurch gekennzeichnet, dass** das weitere Rohr ein Faserverbund-Rohr oder ein metallisches Rohr (80) ist.

4. System nach Anspruch 1, **dadurch gekennzeichnet, dass** das Belastungselement (40) eine Außenmuffe ist, welche die Verbindungsstelle der zu verbindenden Bauteile umgibt.

5. System nach Anspruch 1, **dadurch gekennzeichnet, dass** die Heizwendeln (42, 42') unabhängig voneinander mit Energie zu beaufschlagen sind.

6. System nach Anspruch 1, **dadurch gekennzeichnet, dass** die Heizwendeln (42, 42') elektrisch in Reihe geschaltet sind.

7. System nach Anspruch 1, **dadurch gekennzeichnet, dass** die Außenmuffe (40) einen Träger (60) aufweist, an dem zumindest ein mit Heizwendel versehenes Schweißelement (62, 64) angebracht ist.

8. System nach Anspruch 4, **dadurch gekennzeichnet, dass** die Außenmuffe (40) mit einer Verstärkungsschicht versehen ist.

9. System nach Anspruch 1, **dadurch gekennzeichnet, dass** das Versiegelungselement (60) eine den Innendruck abfangende Dichtlippe (70) aufweist.

## Claims

1. A system, consisting of:
at least one fiber composite pipe;
another pipe, possibly consisting of other materials than the fiber composite pipe; and
a connecting arrangement for non-positive fastening of the at least one fiber composite pipe to the other pipe, wherein a two-pieced sealing element (30, 31, 33) is provided, comprising at least two inner sleeve elements (31, 33) and having a positioning flange (64), said sealing element is joined at least with said fiber composite component (10, 20) by means of heating coil fusion technique, so that said sealing element surrounds the exposed fiber ends of the respective fiber composite pipe in a gas- and fluid tight manner, and that a loading element (40) is provided which ensures the non-positive connection between the joined pipes, the loading element is provided with two heating coils (42, 42') at its side pointing towards the fiber composite pipe (10, 20), the heating coils being spaced apart from another, so that directly at a mirror surface (50), where the inner sleeve elements (31, 33) meet, it is not welded.

2. The connecting arrangement for claim 1, **characterized in that** said sealing element (30, 31, 33) provides for the alignment of the components (10, 20) to be joined.

3. The connecting arrangement of claim 1, **characterized in that** the other pipe is a fiber composite pipe or a metal pipe.

4. The connecting arrangement of claim 1, **characterized in that** said loading element (40) is an outer sleeve which surrounds the connecting site of the components to be joined.

5. The connecting arrangement of claim 1, **characterized in that** said heating coils (42, 42') can be supplied with energy independently.

6. The connecting arrangement of claim 1, **characterized in that** said heating coils (42, 42') are electrically connected in series.

7. The connecting arrangement of claim 1, **characterized in that** the outer sleeve (40) comprises a support (60), at least one fusion element (62, 64) comprising a heating coil being mounted thereon.

8. The connecting arrangement of claim 1, **characterized in that** said outer sleeve is provided with a reinforcing layer.

9. The connecting arrangement of claim 1, **characterized in that** said sealing element (60) comprises a sealing lip (70) for relieving internal pressure.

## Revendications

1. Système constitué de :
au moins un tube en matériau composite renforcée par des fibres ;
un autre tube, le cas échéant constitué de matériaux différents du tube en matériau composite renforcée par des fibres ; et
un dispositif de liaison pour la liaison par friction de l'au moins un tube en matériau composite renforcée par des fibres à l'autre tube, dans lequel un élément de scellement (30, 31, 33) en deux parties, comprenant au moins deux éléments de monchons internes (31, 33) et une bride de positionnement (64), est prévu, qui est relié, à l'aide d'une technique de soudure à filament chauffant, au moins avec l'au moins un tube en matériau composite renforcée par des fibres (10, 20), de façon à ce qu'il entoure des extrémités libres de fibres du tube en matériau composite renforcée par des fibres (10, 20) correspondant de manière étanche aux gaz et aux fluides et en ce qu'un élément de charge (40) est prévu, qui assure la liaison par friction entre les tubes reliés et au niveau duquel, sur le côté orienté vers le tube en matériau composite renforcée par des fibres (10, 20), se trouvent deux filaments chauffants (42, 42'), de façon à ce que, directement sur une surface de miroir (50), au niveau de laquelle les éléments de manchons internes (31, 33), une soudure ne soit pas effectuée.

2. Système selon la revendication 1, **caractérisé en ce que** l'élément de scellement (30, 31, 33) assure l'orientation des composants (10, 20) à relier.

3. Système selon la revendication 1, **caractérisé en ce que** l'autre tube est un tube en matériau composite renforcée par des fibres ou un tube métallique (80).

4. Système selon la revendication 1, **caractérisé en ce que** l'élément de charge (40) est un manchon externe qui entoure les éléments de liaison des composants à relier.

5. Système selon la revendication 1, **caractérisé en ce que** les filaments chauffants (42, 42') doivent être alimentés en énergie indépendamment l'un de l'autre.

6. Système selon la revendication 1, **caractérisé en ce que** les filaments chauffants (42, 42') sont branchés en série.

7. Système selon la revendication 1, **caractérisé en ce que** le manchon externe (40) comprend un support (60) sur lequel est monté au moins un élément de soudure (62, 64) muni de filaments chauffants.

8. Système selon la revendication 4, **caractérisé en ce que** le manchon externe (40) est muni d'une couche de renfort.

9. Système selon la revendication 1, **caractérisé en ce que** l'élément de scellement (60) comprend une lèvre d'étanchéité (70) absorbant la pression interne.
